# FASCICULE DE BREVET EUROPEEN

(11) **EP 1 144 321 B1**
(45) Date de publication et mention de la délivrance du brevet: **29.12.2004**
(21) Numéro de dépôt: 00974590.2
(22) Date de dépôt: 27.10.2000
(51) Int. Cl.: C03B 5/26, C21C 5/46, F27D 3/15, B22D 41/24

(54) **PROCEDE ET DISPOSITIF DE SOUTIRAGE D'UN MATERIAU FONDU CONTENU DANS UN CREUSET**
VERFAHREN UND VORRICHTUNG ZUM ABLASSEN EINES GESCHMOLZENEN MATERIALS AUS EINEM HAFEN
METHOD AND DEVICE FOR DRAWING A MOLTEN MATERIAL CONTAINED IN A CRUCIBLE

(30) Priorité: 28.10.1999 FR 9913500
(43) Date de publication de la demande: 17.10.2001
(73) Titulaire: COMMISSARIAT A L'ENERGIE ATOMIQUE, 75752 Paris Cédex 15 (FR); COMPAGNIE GENERALE DES MATIERES NUCLEAIRES, 78140 Velizy Villacoublay (FR)
(72) Inventeur: LADIRAT, Christian, F-30126 Saint-Laurent-des-Arbres (FR); MAURIN, Jean-Louis, F-30200 Bagnols/Ceze (FR); LACOMBE, Jacques, F-30131 Pujaut (FR)
(74) Mandataire: Audier, Philippe André
(86) Numéro de dépôt international: PCT/FR2000/003008
(87) Numéro de publication internationale: WO 2001/030709

(56) Documents cités:
- FR-A- 2 704 634

## Description

### Domaine technique

L'invention concerne un procédé de soutirage d'un matériau fondu, tel que du verre, contenu dans un creuset dont les parois et le fond sont refroidis au moins en partie.

L'invention concerne également un dispositif de soutirage mettant en oeuvre ce procédé.

L'invention s'applique au soutirage de tout matériau fondu contenu dans un creuset dont les parois et le fond sont refroidis au moins partiellement. Une application privilégiée concerne la vitrification de déchets nucléaires de très haute activité.

### Etat de la technique

Pour réaliser la fusion d'un matériau, tel que du verre, il est bien connu d'introduire ce matériau à l'état solide dans un creuset, où il est ensuite fondu, par exemple par induction.

Afin d'augmenter la durée de vie du creuset en le maintenant à une température relativement basse, il est également connu de refroidir au moins en partie les parois et le fond de ce creuset. Ce refroidissement peut notamment être assuré par une circulation d'eau. Il a pour effet de former, au contact des parois et du fond refroidis du creuset, une couche de verre solide stratifié qui isole ceux-ci du matériau en fusion. On peut ainsi élaborer des matériaux fondus, tels que du verre, à des températures élevées (supérieures à 1150°C), sans remplacer trop fréquemment le creuset.

Lorsque cette technique connue est utilisée pour la vitrification de déchets nucléaires de très haute activité, les déchets sont incorporés dans le verre en fusion contenu dans le creuset. La charge de verre contenant les déchets est ensuite vidangée dans un conteneur situé sous le creuset, par un dispositif de soutirage prévu à cet effet dans le fond du creuset.

L'augmentation de la durée de vie des creusets obtenue par le refroidissement des parois et du fond de ceux-ci est particulièrement avantageuse dans cette application. En effet, les creusets usagés constituent alors des déchets radioactifs qu'il faut conditionner et stocker.

De plus, lorsque des creusets à parois et fonds refroidis sont utilisés pour la vitrification de déchets nucléaires, ils constituent des déchets dont le niveau d'activité est moindre que celui des creusets non refroidis. En effet, le verre en fusion se rétracte au contact des parois froides, de sorte que le verre solidifié n'adhère pas à celles-ci. Par conséquent, le creuset peut être parfaitement nettoyé en fin de vie, contrairement à un creuset non refroidi qui présente toujours, même après nettoyage, des particules de verre solide incrustées très radioactives.

Afin de procéder au soutirage du matériau fondu contenu dans un creuset, on connaît différentes techniques de vidange.

Selon une première technique, on utilise une buse de coulée qui traverse verticalement le fond du creuset et se prolonge sur une certaine hauteur en dessous de celui-ci. Le refroidissement de la buse permet de former à l'intérieur de celle-ci un bouchon de verre qui empêche normalement la vidange du creuset. Lorsqu'on désire effectuer un soutirage, on chauffe la buse à l'aide d'un système de chauffage auxiliaire, par exemple par induction.

Cette technique de vidange présente différents inconvénients :
- les buses de coulée sont des pièces d'usure consommables, de faible durée de vie ;
- lorsque la buse est chauffée pour effectuer un soutirage, le bouchon tombe d'un bloc et provoque des éclaboussures de verre liquide, ce qui n'est pas favorable lorsque le verre contient des déchets de haute activité ;
- le refroidissement de la buse de coulée s'effectue avec une très grande inertie, de sorte qu'il est impossible de contrôler le débit de soutirage et d'arrêter les coulées de façon très nette.

Une autre technique de vidange est décrite notamment dans le document FR-A-2 704 634.

Dans ce cas, le dispositif de soutirage comprend un orifice de coulée circulaire traversant le fond refroidi du creuset, une vanne à tiroir refroidi, apte à fermer et à ouvrir cet orifice de façon contrôlée, ainsi qu'un manchon métallique également circulaire inséré dans l'orifice de coulée. Dans ce dispositif, le manchon métallique, généralement réalisé en molybdène, est à une température distincte de celle du fond du creuset et fait saillie vers le haut à l'intérieur de ce dernier, de façon à traverser la couche de verre solidifié contenue dans le fond du creuset, pour pénétrer dans le verre fondu.

Lorsque le tiroir de la vanne est fermé, un bouchon de verre solide se forme dans le manchon métallique, au contact de la face supérieure refroidie dudit tiroir. La vanne est donc également isolée du verre en fusion, de sorte que sa durée de vie est approximativement la même que celle du creuset et qu'elle peut être nettoyée aussi efficacement.

Lorsqu'on désire effectuer un soutirage, on ouvre le tiroir de la vanne. Etant donné que le manchon métallique et le bouchon de verre solide formé dans celui-ci ne sont plus au contact du tiroir refroidi, la viscosité du verre chaud au contact du manchon diminue jusqu'à permettre l'élimination du bouchon de verre solide, qui tombe par gravité. Le positionnement du tiroir de la vanne permet ensuite de régler le débit de verre liquide en obturant plus ou moins l'orifice de coulée.

Ce dispositif de coulée présente également certains inconvénients.

Un premier inconvénient a trait à l'oxydation du manchon de coulée. On constate, en effet, que les faces du manchon en contact avec l'air en fin de vidange sont oxydées. Cela diminue la durée de vie du manchon, ce qui va à l'encontre du but recherché en utilisant un creuset refroidi, qui est précisément de garantir un accroissement de la durée de vie de celui-ci.

Un autre inconvénient du dispositif de soutirage décrit dans le document FR-A-2 704 634 consiste en une rétention permanente de verre en fin de vidange. Du fait que le manchon fait saillie vers le haut sur une certaine distance à partir du fond du creuset, la vidange n'est pas complète. Ceci peut poser des problèmes, notamment dans le cas où le matériau fondu contenu dans le creuset est un verre à forte teneur en platinoïdes. En effet, si ces éléments ne sont pas remis en suspension, ils sédimentent en fond de creuset. A terme, cela peut provoquer des dysfonctionnements d'origine électrique tels que l'apparition d'arcs électriques pouvant entraîner une fusion locale de la paroi supérieure de la structure à double paroi formant le fond du creuset. Cette fusion peut aller jusqu'au percement de ladite paroi supérieure, ce qui provoque des fuites de l'eau de refroidissement dans le creuset.

Dans un tel cas, la seule solution consiste à supprimer le manchon placé dans l'orifice de coulée. Toutefois, on risque alors de ne pas pouvoir effectuer le soutirage. Ainsi, lorsque le matériau fondu est assez mauvais conducteur de la chaleur et présente un point de fusion particulièrement élevé, comme c'est notamment le cas pour les verres à forte teneur en platinoïdes, la coulée du verre ne se déclenche presque jamais après ouverture de la vanne. En effet, le bouchon de verre se déforme alors sous l'effet de son échauffement et de la charge de verre dans le creuset, avant de prendre une position d'équilibre qui empêche la fermeture du tiroir de la vanne.

### Exposé de l'invention

L'invention a précisément pour objet un procédé et un dispositif de soutirage d'un matériau fondu tel que du verre contenu dans un creuset, conçus de façon à ne pas présenter les inconvénients des techniques de soutirage connues, et notamment à permettre de maîtriser avec précision les instants de déclenchement et d'arrêt de la coulée ainsi que son débit, tout en utilisant des pièces dont la durée de vie est comparable à celle d'un creuset froid, en assurant une bonne reproductibilité du processus de coulée, en évitant les projections de verre et en permettant un bon contrôle et une bonne stabilité du jet de verre en fusion, quelle que soit la nature de celui-ci, sans risque de rétention de verre en fin de vidange.

Conformément à l'invention, ce résultat est obtenu au moyen d'un procédé de soutirage d'un matériau fondu, contenu dans un creuset dont un fond est refroidi, au moins en partie, pour former une couche solidifiée du matériau au contact dudit fond, procédé selon lequel on réalise le soutirage en ouvrant une vanne, également refroidie, obturant initialement un orifice de coulée formé dans le fond du creuset, caractérisé en ce qu'on utilise un orifice de coulée présentant une forme allongée en vue de dessus, et en ce qu'on déclenche le soutirage à une première extrémité dudit orifice, en formant un pont thermique entre une partie du fond délimitant ladite première extrémité et le matériau fondu contenu dans le creuset, au-dessus de ladite couche solidifiée.

Ainsi, en remplaçant la forme habituellement circulaire de l'orifice de coulée par une forme allongée, et en formant un pont thermique entre l'une des extrémités de cet orifice et le matériau fondu, on est sûr de pouvoir déclencher la coulée du matériau, quelle que soit sa nature, sans risque de rétention de ce matériau en fin de vidange.

De plus, du fait que le pont thermique est réalisé intégralement à l'intérieur du creuset, il n'est jamais en contact avec l'air, de sorte que les risques d'oxydation sont réduits. Sa durée de vie est donc la même que celle de l'ensemble du creuset.

En outre, l'agencement du pont thermique à une extrémité d'un orifice de coulée allongé permet de commander le déclenchement de la coulée d'une manière parfaitement contrôlée et reproductible. En particulier, le bouchon formé par le matériau est fondu progressivement à partir de cette extrémité, de sorte qu'il n'existe aucun risque de projection due à la chute du bouchon solide, contrairement à toutes les techniques existantes.

Avantageusement, on forme le pont thermique en plaçant un barreau en un matériau thermiquement conducteur dans le creuset, en contact avec la partie de fond de celui-ci le long de la première extrémité de l'orifice de coulée. La température du verre coulé est cependant limitée à la température de fusion du métal constituant le pont thermique.

Dans un mode de réalisation préféré de l'invention, on utilise une vanne comprenant un tiroir refroidi, qui coulisse sous l'orifice de coulée selon un axe longitudinal de celui-ci.

De préférence, on localise alors le déclenchement du soutirage selon l'axe longitudinal de l'orifice de coulée, en donnant à la première extrémité de celui-ci et à une extrémité d'attaque du tiroir refroidi des formes respectivement convexe et concave, centrées sur l'axe longitudinal de l'orifice de coulée. Ainsi, la première extrémité de l'orifice de coulée présente avantageusement une forme sensiblement en V.

Dans le mode de réalisation préféré de l'invention, on utilise également un creuset dont le fond présente une épaisseur relativement faible autour de l'orifice de coulée. Cette caractéristique facilite la fusion du bouchon formé dans l'orifice de coulée après ouverture de la vanne.

Pour la même raison le fond du creuset est avantageusement dépourvu de moyens de refroidissement à proximité immédiate de l'orifice de coulée.

L'invention a également pour objet un creuset avec un dispositif de soutirage d'un matériau fondu contenu dans le creuset, le creuset comprenant un fond et des moyens pour refroidir celui-ci au moins en partie, pour former une couche solidifiée du matériau au contact du fond, et le dispositif de soutirage comportant une vanne, des moyens de refroidissement de celle-ci, et un orifice de coulée formé dans le fond du creuset et normalement obturé par la vanne, caractérisé en ce que l'orifice de coulée présente une forme allongée en vue de dessus, et en ce que des moyens formant pont thermique sont interposés entre une partie du fond délimitant une première extrémité de l'orifice de coulée et le matériau fondu contenu dans le creuset, au-dessus de ladite couche stratifiée.

### Brève description des dessins

On décrira à présent, à titre d'exemple non limitatif, un mode de réalisation préféré de l'invention, en se référant aux dessins annexés, dans lesquels :
- la figure 1 est une vue en coupe schématique montrant une partie d'une installation de fusion à creuset froid incorporant un dispositif de soutirage conforme à l'invention ;
- la figure 2 est une vue en perspective représentant plus en détail le dispositif de soutirage de l'installation illustrée sur la figure 1 ; et
- les figures 3A à 3D sont des vues en coupe schématique comparables à la figure 1, illustrant quatre étapes successives du procédé de soutirage selon l'invention.

### Description détaillée d'un mode de réalisation préféré de l'invention

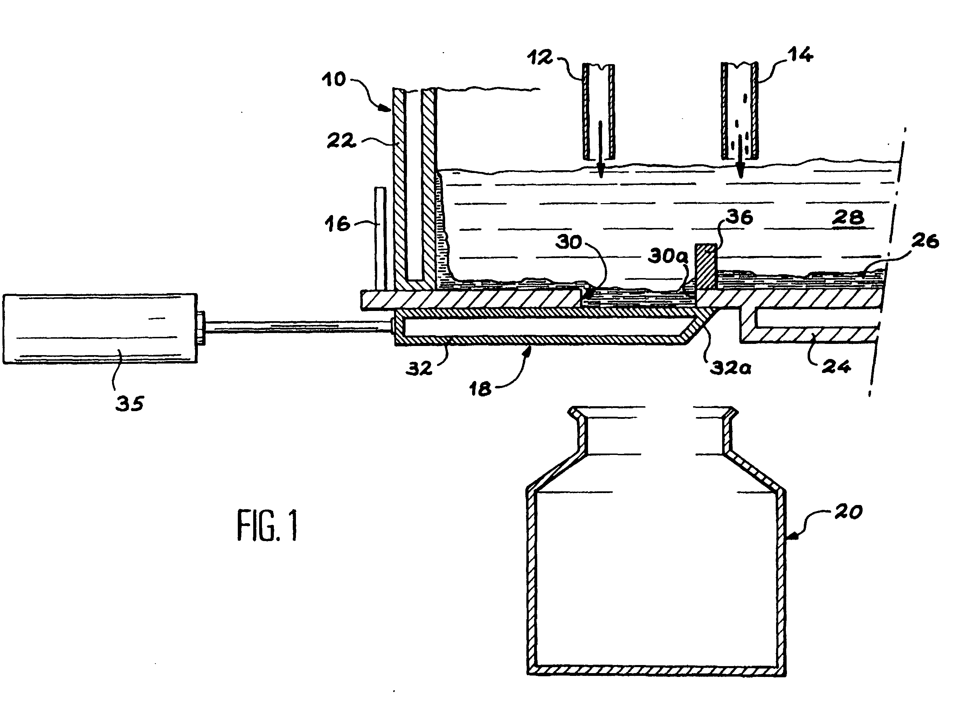

Comme l'illustre très schématiquement la figure 1, une installation de fusion en creuset froid utilisée pour la vitrification de déchets nucléaires de très haute activité comprend un creuset 10, refroidi en permanence, des canalisations 12 et 14 permettant respectivement d'introduire du verre et des déchets dans le creuset 10, des moyens de chauffage tels qu'un inducteur 16 entourant le creuset 10, un dispositif de soutirage 18 et un conteneur 20 agencé sous le creuset 10 de façon à recevoir le verre en fusion lors de la manoeuvre du dispositif de soutirage.

Le creuset 10 comprend une paroi périphérique 22, par exemple cylindrique, ainsi qu'un fond plan 24, encore appelé "sole". La paroi 22 et le fond 24 du creuset 10 sont équipés, au moins en partie, de moyens de refroidissement indépendants. Dans le mode de réalisation représenté, ces moyens de refroidissement consistent en une circulation d'eau à température régulée, par exemple environ 20°C, à l'intérieur des parois 10 et du fond 24. Ceux-ci présentent à cet effet une structure à double paroi, comme le montre la figure 1.

Lorsque du verre est introduit dans le creuset 10, sous forme solide, par la canalisation 12, il est fondu par un actionnement des moyens de chauffage, constitués ici par l'inducteur 16. Simultanément, la mise en oeuvre continue des moyens de refroidissement des parois 22 et du fond 24 du creuset crée une couche de verre solidifié 26 au contact de ceux-ci. Le verre en fusion 28 contenu dans le creuset 10 est donc séparé des parois 22 et du fond 24 par la couche de verre solidifié 26.

Les déchets nucléaires de très haute activité que l'on désire conditionner sont introduits à ce stade dans le verre en fusion 28 par la canalisation 14.

Lorsqu'on désire vidanger le verre en fusion 28, contenant les déchets, dans le conteneur 20 placé en dessous du creuset 10, on actionne le dispositif de soutirage 18.

Conformément à l'invention, ce dispositif de soutirage 18 comprend un orifice de coulée 30 traversant le fond 24 du creuset 10, une vanne à tiroir 32 obturant normalement cet orifice, ainsi qu'un moyen formant pont thermique, dont la réalisation, l'agencement et la fonction seront décrits plus en détail par la suite.

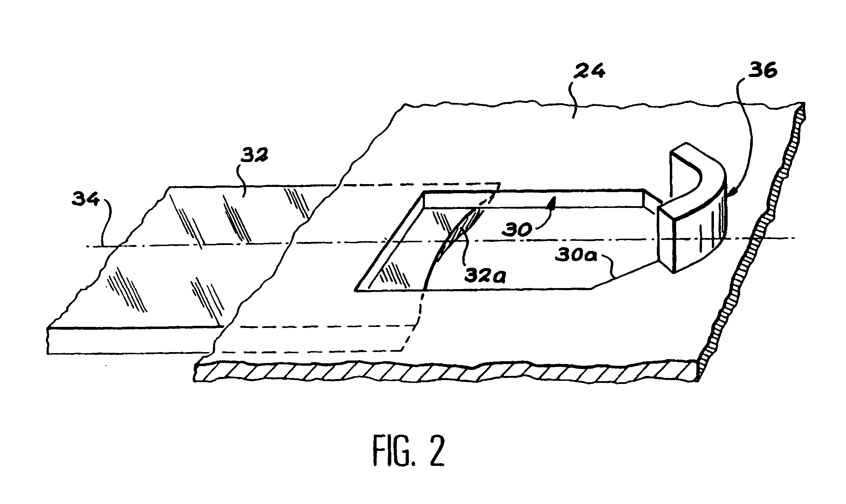

Dans le plan formé par le fond 24 du creuset 10, c'est-à-dire en vue de dessus l'orifice de coulée 30 présente une forme allongée et de relativement grandes dimensions. Dans le mode de réalisation représenté plus précisément sur la figure 2, l'orifice de coulée 30 présente approximativement la forme d'un rectangle dont une première extrémité 30a est convexe et sensiblement en forme de V dont la pointe est arrondie. Plus précisément, cette première extrémité 30a de l'orifice de coulée 30 est centrée sur l'axe longitudinal 34 de cet orifice, c'est-à-dire symétrique par rapport à cet axe. Tous les autres côtés de l'orifice 30 sont droits. Les dimensions de l'orifice de coulée 30 sont, par exemple, de 100 mm x 60 mm.

Dans la pratique, l'orifice de coulée 30 est formé avantageusement en un emplacement relativement proche de la paroi 22 du creuset 10, pour faciliter l'implantation des moyens de guidage et de commande du tiroir 32 de la vanne à l'extérieur de cette paroi 22. Cela permet de préserver ces moyens de guidage et de commande de la chaleur dissipée par le verre en fusion. Les risques de dysfonctionnement tels que le blocage du tiroir 32 dû par exemple à des dilatations des guidages ou à un mauvais fonctionnement des moyens de commande sont ainsi diminués.

L'axe longitudinal 34 de l'orifice de coulée 30 est avantageusement orienté radialement par rapport à la paroi 22 du creuset 10. La première extrémité 30a de l'orifice de coulée 30 est alors tournée vers le centre du creuset, alors que l'extrémité opposée de l'orifice 30 est tournée vers la paroi 22.

Par ailleurs, les moyens de refroidissement du fond 24 du creuset 10, matérialisés ici par une structure à double paroi, ne s'étendent pas jusqu'aux bords de l'orifice de coulée 30. Ainsi, la partie centrale de cet orifice reste relativement éloignée des moyens de refroidissement. Cela permet de maintenir les différents éléments du dispositif de soutirage à une température suffisamment basse pour éviter tout dysfonctionnement, tout en évitant de trop refroidir le bouchon de verre solide qui se forme dans l'orifice de coulée 30, lorsque la vanne est fermée. Ainsi, lors de l'ouverture de celle-ci, la plus grande partie du flux de chaleur issu du verre en fusion 28 est transmise au bouchon, et non à l'eau de refroidissement qui circule dans le fond 24 du creuset. Ceci facilite l'échauffement du bouchon nécessaire au déclenchement de la coulée. La température du verre coulé est cependant limitée à la température de fusion du métal constituant le pont thermique.

Par ailleurs et comme l'illustre notamment la figure 1, l'orifice de coulée 30 est formé dans une partie d'épaisseur relativement faible du fond 24 du creuset 10. Dans le mode de réalisation représenté où le refroidissement du fond 24 est obtenu en réalisant celui-ci sous la forme d'une structure à double paroi, dans laquelle est établie une circulation d'eau, l'orifice de coulée 30 est formé dans une partie du fond 24 présentant une structure à paroi unique alignée avec la paroi supérieure de cette structure à double paroi. L'épaisseur de cette paroi unique est, par exemple, d'environ 5 mm.

Il est à noter qu'en pratique, la partie du fond 24 comportant l'orifice de coulée 30 peut être formée dans le corps de la vanne servant à obturer cet orifice. Le corps de la vanne fait alors partie intégrante du fond du creuset et comporte des moyens de refroidissement qui présentent les caractéristiques décrites précédemment.

Comme les parois 22 et le fond 24 du creuset 10, le tiroir 32 de la vanne est muni de moyens de refroidissement indépendants. Lorsque la vanne est fermée, ces moyens de refroidissement assurent le refroidissement de la partie du fond 24 du creuset dans laquelle est pratiqué l'orifice de coulée 30. Ils contribuent notamment à la formation d'un bouchon de verre solidifié dans cet orifice. Dans le mode de réalisation représenté, les moyens de refroidissement du tiroir 32 sont des moyens de refroidissement par circulation d'eau à l'intérieur de ce tiroir, qui présente à cet effet, une structure à double paroi.

Le tiroir 32 est placé sous le fond 24 du creuset, et plus précisément sous la partie de ce fond dans laquelle est formé l'orifice de coulée 30, de façon à pouvoir obturer et ouvrir plus ou moins cet orifice lors de son déplacement. Le tiroir 32 est légèrement plus large que l'orifice 30, de façon à garantir son obturation complète lorsque la vanne est fermée.

Le tiroir 32 est apte à se déplacer en translation sous le fond 24 du creuset, sous l'action d'un vérin électrique 35 combiné à des moyens de guidage (non représentés). L'agencement de l'orifice de coulée 30 à proximité de la paroi 22 permet de placer le vérin 35 et les moyens de guidage à l'extérieur du creuset 10, comme on l'a indiqué précédemment. L'axe de déplacement du tiroir 32 de la vanne est confondu avec l'axe 34 de l'orifice de coulée 30.

Le tiroir 32 présente une extrémité avant, ou extrémité d'attaque 32a, qui se déplace vers la première extrémité 30a de l'orifice de coulée 30 lorsque la vanne est actionnée dans le sens de la fermeture. Lorsque la vanne est fermée, l'extrémité d'attaque 32a est située légèrement au-delà de la première extrémité 30a de l'orifice de coulée, de sorte que celui-ci est totalement obturé.

Comme l'illustrent les figures 1 et 2 l'extrémité d'attaque 32a du tiroir 32 de la vanne est biseautée vers le bas, de façon à présenter un angle aigu dans sa partie affleurant le fond 24 du creuset 10. De plus, l'extrémité d'attaque 32a du tiroir 32 présente en vue de dessus une forme concave, approximativement en arc de cercle, dans le sens de la largeur de l'orifice de coulée 30. Cette forme concave est centrée sur l'axe longitudinal 34 de l'orifice de coulée 30, c'est-à-dire disposée symétriquement par rapport à cet axe.

Les formes respectivement convexe et concave des extrémités 30a et 32a en vis-à-vis, constituent un diaphragme centré sur l'axe longitudinal 34 et qui s'ouvre progressivement lorsque le tiroir 32 est actionné dans le sens de l'ouverture. Comme on le comprendra mieux par la suite, cet agencement permet de localiser le déclenchement de la fusion du bouchon obturant initialement l'orifice de coulée 30, du côté de son extrémité 30a. Il permet aussi de poursuivre cette fusion vers l'extrémité opposée de l'orifice de coulée, selon son axe longitudinal 34. On réalise ainsi une fusion contrôlée et reproductible du bouchon, sans aucun risque de chute du bouchon non fondu dans le conteneur 20.

Comme l'illustrent les figures 1 et 2, le dispositif de soutirage 18 comprend en outre un moyen formant pont thermique, matérialisé par un barreau 36 dans le mode de réalisation représenté. Ce barreau 36, réalisé par exemple en acier inoxydable, est maintenu en contact avec le fond 24 du creuset 10 dans sa partie immédiatement attenante à la première extrémité 30a de l'orifice de coulée 30. Plus précisément, le barreau 36 est par exemple, soudé sur la face supérieure du fond 24, dans sa partie d'épaisseur réduite formée d'une simple paroi, le long du bord de l'orifice 30 formant la pointe de l'extrémité 30a de cet orifice. Le barreau 36 forme ainsi en vue de dessus un V arrondi agencé symétriquement par rapport à l'axe longitudinal 34 de l'orifice de coulée 30. De plus, le barreau 36 fait saillie vers le haut à l'intérieur du creuset 10 sur une hauteur suffisante pour que sa partie supérieure soit en contact avec le verre en fusion 28. Cette hauteur est, par exemple, d'environ 30 mm. Le barreau 36 forme ainsi un pont thermique entre le verre en fusion 28 et le fond 24 du creuset 10, en traversant la couche de verre solidifié 26 qui recouvre ce dernier. En partant du bord de l'orifice 30, le barreau 36 présente, par exemple, une épaisseur d'environ 3 mm.

En combinaison avec la forme allongée de l'orifice de coulée 30, le pont thermique formé par le barreau 36 contribue à déclencher le soutirage à l'extrémité 30a de l'orifice de coulée 30, lors de l'ouverture du tiroir 32.

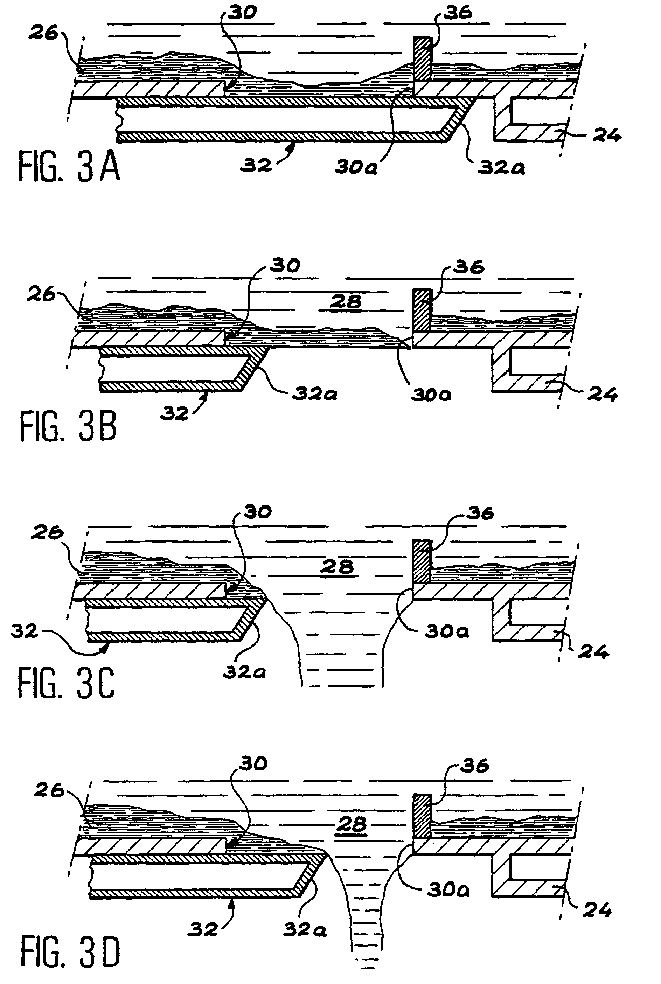

La mise en oeuvre du dispositif de soutirage 18 conforme à l'invention va à présent être décrite en se référant successivement aux figures 3A à 3D.

Initialement (figure 3A) le tiroir 32 occupe sa position la plus avancée. Il obture alors en totalité l'orifice de coulée 30. Sous l'effet du refroidissement du fond 24 du creuset et du tiroir 32 de la vanne, une couche de verre solidifiée 26 recouvre le fond du creuset et forme un bouchon qui remplit l'orifice de coulée 30.

Lorsque l'ouverture de la vanne est commandée, le tiroir 32 s'escamote sous l'action du vérin 35 (figure 1). Son extrémité d'attaque 32a se trouve alors à 70 mm de la première extrémité 30a de l'orifice de coulée 30.

Trois ou quatre minutes plus tard, la coulée se déclenche. Plus précisément, du fait que le bouchon de verre solidifié qui obture l'orifice de coulée 30 n'est plus refroidi par le tiroir 32 de la vanne, et sous l'effet du pont thermique formé par le barreau 36, ce bouchon commence à fondre au niveau de la première extrémité 30a de l'orifice 30, selon son axe longitudinal 34. Cet état transitoire est illustré sur la figure 3B.

Dès qu'elle a commencé, la fusion du bouchon de verre se propage très rapidement et presque instantanément, selon l'axe longitudinal 34 de l'orifice de coulée 30, jusqu'à l'extrémité d'attaque 32a du tiroir 32 de la vanne, comme le montre la figure 3C. On atteint alors un débit d'écoulement maximal du verre en fusion, sans aucune chute de verre solide dans le conteneur 20 qui se trouve en dessous de l'orifice 30.

Le débit de coulée du verre est ensuite immédiatement contrôlé par une fermeture partielle du tiroir 32 de la vanne (figure 3D), afin de compenser la variation du niveau de verre dans le creuset 10.

L'arrêt de la coulée est obtenu en fermant le tiroir 32 de la vanne. Un bouchon de verre se forme alors instantanément au contact du tiroir 32 refroidi. L'installation se retrouve alors dans l'état initial illustré sur la figure 3A.

Le dispositif de soutirage conforme à l'invention permet donc de maîtriser avec précision le délai de déclenchement de la coulée ainsi que son débit.

En outre, du fait que le barreau 36 formant pont thermique est placé intégralement à l'intérieur du creuset 10 et réalisé en acier inoxydable, il n'est soumis à aucune oxydation. Sa durée de vie est donc la même que celle de l'ensemble du creuset.

Par ailleurs, l'utilisation d'un pont thermique local permet d'éviter toute rétention de verre dans le creuset 10 lorsque celui-ci est totalement vidangé.

De plus, et de façon essentielle, la combinaison du pont thermique constitué par le barreau 36 avec la forme allongée donnée à l'orifice de coulée 30 permet de faire fondre le bouchon de verre qui obture ce dernier en intégralité d'une extrémité de l'orifice à l'autre lorsque la vanne est ouverte. Toute chute de verre solidifié génératrice de projection dans le conteneur est ainsi évitée.

Enfin, les formes particulières données aux extrémités 30a, 32a en vis-à-vis de l'orifice de coulée 30 et du tiroir 32 de la vanne assurent un centrage et une stabilité avantageuse du jet de verre en fusion lors du soutirage.

La description qui précède concerne le soutirage d'un verre contenant des déchets nucléaires de très haute activité. Toutefois, le procédé et le dispositif de soutirage selon l'invention s'appliquent à la vidange de tout type de matériau fondu, contenu dans un creuset refroidi.

## Revendications

1. Procédé de soutirage d'un matériau fondu (28), contenu dans un creuset (10) dont un fond (24) est refroidi, au moins en partie, pour former une couche solidifiée (26) du matériau au contact dudit fond, procédé selon lequel on réalise le soutirage en ouvrant une vanne, également refroidie, obturant initialement un orifice de coulée (30) formé dans le fond (24) du creuset (10), **caractérisé en ce qu'**on utilise un orifice de coulée (30) présentant une forme allongée en vue de dessus, et **en ce qu'**on déclenche le soutirage à une première extrémité (30a) dudit orifice, en formant un pont thermique entre une partie du fond (24) délimitant ladite première extrémité (30a) et le matériau fondu contenu dans le creuset (10), au-dessus de ladite couche solidifiée (26).

2. Procédé selon la revendication 1, dans lequel on forme le pont thermique en plaçant un barreau (36) en un matériau thermiquement conducteur dans le creuset (10), en contact avec la partie de fond (24) de celui-ci le long de la première extrémité (30a) de l'orifice de coulée (30).

3. Procédé selon l'une quelconque des revendications 1 et 2, dans lequel on utilise une vanne comprenant un tiroir refroidi (32), qui coulisse sous l'orifice de coulée (30) selon un axe longitudinal (34) de celui-ci.

4. Procédé selon la revendication 3, dans lequel on localise le déclenchement du soutirage selon l'axe longitudinal de l'orifice de coulée (30), en donnant à la première extrémité (30a) de celui-ci et à une extrémité d'attaque (32a) du tiroir refroidi (32) des formes respectivement convexe et concave, centrées sur l'axe longitudinal (34).

5. Procédé selon la revendication 4, dans lequel on donne à la première extrémité (30a) de l'orifice de coulée (30) une forme sensiblement en V.

6. Procédé selon l'une quelconque des revendications précédentes, dans lequel on utilise un creuset (10) dont le fond (24) présente une épaisseur relativement faible autour de l'orifice de coulée (30).

7. Procédé selon l'une quelconque des revendications, précédentes dans lequel on utilise un creuset (10) dont le fond (24) est dépourvu de moyens de refroidissement à proximité immédiate de l'orifice de coulée (30).

8. Creuset (10) avec un dispositif de soutirage (18) d'un matériau fondu (28) contenu dans le creuset (10), le creuset comprenant un fond (24) et des moyens pour refroidir celui-ci au moins en partie, pour former une couche solidifiée (26) du matériau au contact du fond (24), et le dispositif de soutirage comportant une vanne, des moyens de refroidissement de celle-ci, et un orifice de coulée (30) formé dans le fond (24) du creuset (10) et normalement obturé par la vanne, **caractérisé en ce que** l'orifice de coulée (30) présente une forme allongée en vue de dessus, et **en ce que** des moyens (36) formant pont thermique sont interposés entre une partie du fond (24) délimitant une première extrémité (30a) de l'orifice de coulée (30) et le matériau fondu (28) contenu dans le creuset (10), au-dessus de ladite couche stratifiée.

9. Dispositif selon la revendication 8, dans lequel les moyens formant pont thermique comprennent un barreau (36) en un matériau thermiquement conducteur, monté dans le creuset (10), en contact avec ladite partie du fond (24), le long de la première extrémité (30a) de l'orifice de coulée (30).

10. Dispositif selon l'une quelconque des revendications 8 et 9, dans lequel la vanne comprend un tiroir refroidi (32), apte à coulisser sous l'orifice de coulée (30) selon un axe longitudinal (34) de celui-ci.

11. Dispositif selon la revendication 10, dans lequel la première extrémité (30a) de l'orifice de coulée (30) et une extrémité d'attaque (32a) du tiroir refroidi (32) présentent respectivement des formes convexe et concave, centrées sur ledit axe longitudinal (34).

12. Dispositif selon la revendication 11, dans lequel la première extrémité (30a) de l'orifice de coulée (30) a une forme sensiblement en V.

13. Dispositif selon l'une quelconque des revendications 8 à 12, dans lequel le fond (24) du creuset (10) présente une épaisseur relativement faible autour de l'orifice de coulée (30).

14. Dispositif selon l'une quelconque des revendications 8 à 13, dans lequel le fond (24) est dépourvu de moyens de refroidissement à proximité immédiate de l'orifice de sortie (30).

## Patentansprüche

1. Verfahren zum Ablassen eines geschmolzenen Materials (28) aus einem Tiegel (10), dessen Boden (24) wenigstens partiell gekühlt wird, um eine erstarrte Schicht (26) aus dem Material zu bilden, das mit dem genannten Boden Kontakt hat, wobei man bei diesem Verfahren das Ablassen durchführt, indem man ein ebenfalls gekühltes Ventil öffnet, das zu Beginn ein Gießloch (30) in dem Boden (24) des Tiegels (10) verschließt,
**dadurch gekennzeichnet,**
**dass** das Gießloch (30) in der Draufsicht eine längliche Form aufweist, und dadurch, dass man das Ablassen an einem ersten Ende (30a) der genannten Lochs einleitet, indem man eine Wärmebrücke bildet zwischen einem das genannte erste Ende (30a) abgrenzenden Teil des Bodens (24) und dem in dem Tiegel (10) über der genannten erstarrten Schicht (26) enthaltenen geschmolzenen Material.

2. Verfahren nach Anspruch 1, bei dem man die Wärmebrücke bildet, indem man einen Stab (36) aus einem wärmeleitfähigen Material in dem Tiegel (10) anordnet, in Kontakt mit dem Teil des Bodens (24) längs des ersten Endes (30a) des Gießlochs (30).

3. Verfahren nach einem der Ansprüche 1 und 2, bei dem man ein Ventil mit einem gekühlten Schieber (32) verwendet, der unter dem Gießloch (30) verschiebbar ist, gemäß einer Längsachse (34) von diesem.

4. Verfahren nach Anspruch 3, bei dem man die Einleitung des Ablassens gemäß der Längsachse des Gießlochs (30) lokalisiert, indem man dem ersten Ende (30a) von diesem und einem Angriffsende (32a) des gekühlten Schiebers (32) Formen gibt, die jeweils konvex und konkave sind und auf die Längsachse (34) zentriert sind.

5. Verfahren nach Anspruch 4, bei dem man dem ersten Ende (30a) des Gießlochs (30) im Wesentlichen eine V-Form gibt.

6. Verfahren nach einem der vorangehenden Ansprüche, bei dem man einen Tiegel (10) verwendet, dessen Boden (24) um die Gießöffnung (30) herum eine relativ kleine Dicke aufweist.

7. Verfahren nach einem der vorangehenden Ansprüche, bei dem man einen Tiegel (10) benutzt, dessen Boden (24) keine Kühleinrichtungen in unmittelbarer Nähe des Gießlochs (30) hat.

8. Tiegel (10) mit einer Vorrichtung (18) zum Ablassen eines in dem Tiegel (10) enthaltenen geschmolzenen Materials (28), wobei der Tiegel einen Boden (24) umfasst und Einrichtungen, um diesen wenigstens partiell zu kühlen, um eine erstarrte Schicht (26) aus dem Material zu bilden, das mit dem Boden (24) Kontakt hat, und die Ablassvorrichtung ein Ventil, Kühleinrichtungen von diesem und ein Gießloch (30) umfasst, ausgebildet in dem Boden (24) des Tiegels (10) und normalerweise verschlossen durch das Ventil,
**dadurch gekennzeichnet, dass** das Gießloch (30) in der Draufsicht eine längliche Form aufweist, und dadurch, dass die eine Wärmebrücke bildenden Einrichtungen (36) eingefügt sind zwischen einem das genannte erste Ende (30a) des Gießlochs (30) abgrenzenden Teil des Bodens (24) und dem in dem Tiegel (10) über der genannten erstarrten Schicht enthaltenen geschmolzenen Material (28).

9. Vorrichtung nach Anspruch 8, bei der die die Wärmebrücke bildenden Einrichtungen einen Stab (36) aus einem wärmeleitfähigen Material umfassen, in dem Tiegel (10) in Kontakt mit dem genannten Teil des Bodens (24) angeordnet, längs des ersten Endes (30a) des Gießlochs (30).

10. Vorrichtung nach einem der Ansprüche 8 und 9, bei dem das Ventil einen gekühlten Schieber (32) umfasst, der unter dem Gießloch (30) verschiebbar ist, gemäß einer Längsachse (34) von diesem.

11. Vorrichtung nach Anspruch 10, bei dem das erste Ende (30a) des Gießlochs (30) und ein Angriffsende (32a) des gekühlten Schiebers (32) jeweils konvex und konkave geformt sind und auf die genannte Längsachse (34) zentriert sind.

12. Vorrichtung nach Anspruch 11, bei dem das erste Ende (30a) des Gießlochs (30) im Wesentlichen eine V-Form hat.

13. Vorrichtung nach einem der Ansprüche 8 bis 12, bei dem der Boden (24) des Tiegels (10) um die Gießöffnung (30) herum eine relativ kleine Dicke aufweist.

14. Vorrichtung nach einem der Ansprüche 8 bis 13, bei dem der Boden (24) keine Kühleinrichtungen in unmittelbarer Nähe des Gießlochs (30) hat.

## Claims

1. Drawing off process of a molten material (28) contained in a crucible (10) with an at least partly cooled bottom (24), to form a solidified layer (26) of material at the contact with the said bottom, process according to which drawing off is achieved by opening a valve, also cooled, initially closing off a pour orifice (30) formed in the bottom (24) of the crucible (10), **characterised in that** the shape of the pour orifice (30) as seen from above is elongated, and that drawing off is started at a first end (30a) of the said orifice forming a thermal bridge between a part of the bottom (24) delimiting the said first end (30a) and the molten material contained in the crucible (10) above the said solidified layer (26).

2. Process according to claim 1, in which the thermal bridge is formed by placing a bar (36) made of a heat conducting material in a crucible (10) in contact with the bottom part (24) of the crucible along the first end (30a) of the pour orifice (30).

3. Process according to either of claims 1 and 2, in which a valve is used comprising a cooled slide (32) that slides under the pour orifice (30) along a longitudinal axis (34) of the pour orifice.

4. Process according to claim 3, in which drawing off is started at a position on the longitudinal axis of the pour orifice (30), making the first end (30a) of the pour orifice convex and the leading end (32a) of the cooled slide (32) concave, and centred on the longitudinal axis.

5. Process according to claim 4, in which the first end (30a) of the pour orifice (30) is approximately in the shape of a V.

6. Process according to any one of the above claims, in which a crucible (10) is also used with a relatively thin bottom (24) around the pour orifice (30).

7. Process according to any one of the above claims, in which the bottom (24) of the crucible (10) used does not have any cooling means in the immediate vicinity of the pour orifice (30).

8. Crucible having a device (18) for drawing off a molten material (28) contained in the crucible (10) which comprises a bottom (24) and means of at least partly cooling this crucible to form a solidified layer (26) of the material in contact with the bottom (24), said drawing off device comprising a valve, means of cooling this valve and a pour orifice (30) formed in the bottom (24) of the crucible (10) and normally closed by the valve, **characterized in that** the shape of the pour orifice (30) as seen from above is elongated and **in that** the means (36) forming the thermal bridge are inserted between a part of the bottom (24) delimiting a first end (30a) of the pour orifice (30) and the molten material (28) contained in the crucible (10) above the said stratified layer.

9. Device according to claim 8, in which the means forming a thermal bridge comprise a bar (36) made of a heat conducting material installed in the crucible (10) in contact with the said part of the bottom (24) along the said first end (30a) of the pour orifice (30).

10. Device according to either of claims 8 and 9, in which the valve comprises a cooled slide (32) capable of sliding under the pour orifice (30) along a longitudinal axis (34) of the orifice.

11. Device according to claim 10, in which the shape of the first end (30a) of the pour orifice (30) is concave and the shape of the leading end (32a) of the cooled slide (32) is convex, centred on the said longitudinal axis (34).

12. Device according to claim 11, in which the first end (30a) of the pour orifice (30) is approximately V-shaped.

13. Device according to any one of claims 8 to 12, in which the bottom (24) of the crucible (10) around the pour orifice (30) is relatively thin.

14. Device according to any one of claims 8 to 13, in which the bottom (24) does not have any cooling means in the immediate vicinity of the outlet orifice (30).
